# EUROPEAN PATENT APPLICATION

(11) **EP 2 107 627 A1**
(43) Date of publication of application: **07.10.2009**
(21) Application number: 09155668.8
(22) Date of filing: 20.03.2009
(51) Int. Cl.: H01M 4/02, H01M 4/48, H01M 10/40

(54) **Manufacturing Method of Electrode Material, and Electric Storage Device**

(30) Priority: 31.03.2008 JP 2008090735
(71) Applicant: Fuji Jukogyo Kabushiki Kaisha, Tokyo (JP)
(72) Inventor: Shiozaki, Ryuji, Tokyo 160-8316 (JP); Kaneko, Satoko, Tokyo 160-8316 (JP); Ando, Nobuo, Tokyo 160-8316 (JP)
(74) Representative: Sajda, Wolf E.

(57) **Abstract**

When a layered crystal material of vanadium pentoxide that can be used as a positive electrode active material is manufactured, no sulfur-containing organic material is used as a raw material in the present invention. Therefore, any uncertain adhesion of a sulfur-containing organic material to the layered crystal material is eliminated. The property of the suspension containing a vanadium compound and a plurality of lithium compounds such as lithium sulfide and lithium hydroxide is adjusted by using these lithium compounds. By such an adjustment, the pentavalence of the vanadium ions is controlled to be a desired ratio. Consequently, an active material having reproducibility can be manufactured. First discharge energy of a lithium ion secondary battery using the active material can be enhanced.

## Description

### BACKGROUND OF THE INVENTION

### 1. Field of the Invention

The present invention relates to a technique of a layered crystal material of vanadium, and more particularly to a technique well adaptable to a positive electrode active material or the like of a lithium ion secondary battery serving as an electric storage device.

### 2. Description of the Related Arts

In a lithium ion secondary battery, a battery performance is enhanced by using, for a positive electrode, an active material having lithium ions intercalated therein from the beginning. Vanadium pentoxide is a promising material as an active material. It has been found that vanadium pentoxide having a crystal structure with a predetermined layer length is effective for the positive electrode active material, as disclosed in Japanese Patent Application No. 2006-306 018.

As disclosed in the aforesaid application, the vanadium pentoxide having the layered crystal structure described above is manufactured through a production process described below. Specifically, vanadium pentoxide is used as a vanadium source. Lithium sulfide is used as a lithium source. 3,4-ethylenedioxythiophene (EDOT) which is a sulfur-containing organic material is used as a monomer of a sulfur-containing organic conductive polymer.

The three materials described above are suspended in water, and heated to reflux. Thereafter, the resultant is filtered, and then the filtrate is concentrated. After such a concentration, the resultant is dried under vacuum, and pulverized by a ball mill. After the pulverization, the resultant is classified, whereby powders of layered crystal material are obtained. The obtained powders can effectively be used as the active material for the positive electrode.

In the preparation method disclosed in the above-mentioned application, attention has been paid to the temperature for the heating, temperature for the concentration, or the like. The progression of amorphization is adjusted so as to control the layer length of the microcrystal particle within a predetermined range.

The document JP-A-5-198 300 discloses the use of γ-type LiV₂O₅, which allows lithium ions to easily go in or go out, for a positive electrode active material. It also discloses that the γ-type LiV₂O₅ can be obtained by burning vanadium pentoxide and lithium salt.

It has been found in the previous application that microcrystal particles of vanadium pentoxide having a predetermined layer length are effective for a positive electrode active material having lithium ions intercalated therein. Further, the property of the cell using the microcrystal particles described above has been verified.

The present inventors have studied about further improvements of a battery performance by using the microcrystal particles of vanadium pentoxide. It has been known that a vanadium metal can take many valences. In view of this, the present inventors have conceived that there is a valence distribution of vanadium ions that is advantageous for the formation of the layered crystal particles into which lithium ions are doped. If the valence distribution is controlled to be a suitable valence distribution of vanadium ions, the battery performance using the microcrystal particle, serving as the layered crystal particle, should be enhanced.

During the study of the material described above, the present inventors have faced the problem of reproducibility of the battery performance. Specifically, the use of the material described above enhances the battery performance, but the inventors have also found that the enhancement in the reproducibility of the performance is needed.

In the current situation, although the battery performance can be enhanced, the reproducibility varies. This problem is unnoticeable when properties of a plurality of batteries are tentatively averaged so as to know the property. However, the present inventors have noticed that this problem is an extremely significant problem that should be solved in starting mass production.

There are various factors that cause the variation in the reproducibility of the battery property. One of the factors is an active material. When the active material is a layered crystal material, in particular, the state of presence of the layered crystal material varies. When the active material is a metal crystal that can take a plurality of valences, in particular, crystals according to the valence of the metal are formed, which greatly affects the reproducibility.

When the valences are the same due to the reaction or the like, the influence is small, but if not, crystals according to a plurality of valences are mixedly present. When the material having crystals according to the plurality of valences mixedly present is used for the active material of an electrode, the property value thereof varies. This is because the property value changes according to the mixing ratio of the crystals according to the plurality of valences.

It is extremely difficult to control the mixing ratio of the crystals to be constant according to the plurality of valences. The control described above is theoretically possible, and it is possible in the level of the production in a laboratory. However, the control described above is almost impossible in a real mass-production site. Accordingly, the mixing ratio is different for each manufacturing lot, and it is considered that the different mixing ratio is one factor of the variation in the property value. Therefore, what is needed is that the variation in the crystal state falls within a predetermined range for every product of the layered crystal material.

Basically, the mixing ratio of the crystal greatly depends upon a manufacturing method of the crystal. Specifically, the mixing ratio is different according to the manufacturing method. The different mixing ratio is not such a big problem in a small-quantity production. However, when a mass production is aimed at, it is considered that the mixing ratio is different for every lot even by the same manufacturing method.

Even by the same manufacturing method, a certain latitude is allowed in a manufacturing condition, whereby the mixing ratio varies. As the inventors sometimes experienced in an experiment, a slight difference in the condition appears as a great difference in the result. The difference in the mixing ratio affects the property of an electric storage device when the obtained material is used for the active material. Specifically, the difference in the mixing ratio leads to the variation in the property of an electric storage device.

For example, the vanadium pentoxide is a layered crystal material, and as described above, it is very promising as the positive electrode active material. The inventors have confirmed in the previous application that the layer length of the vanadium pentoxide greatly affects the role as the active material. However, in our further research, the inventors have found that the problem lies in that the layered crystal state of the vanadium pentoxide having the layer length is not uniform.

The presence ratio of the layered crystal particle of the vanadium pentoxide varies for each manufacturing, although it has been confirmed in a finally manufactured material. If the layered crystal particles of the vanadium pentoxide affect the effectiveness as the active material, the variation must naturally lead to the variation in the property of the active material.

In view of this, the present inventors have considered that the manufacturing process of the vanadium pentoxide has to be reconsidered. A series of the manufacturing method is composed of a plurality of combinations of single operations. The inventors have considered that, in order to eliminate the variation in the property, control in a certain form on a step that affects the final state of the layered crystal material is needed.

The variation is also caused when the lithium ions cannot smoothly go in or go out of the layered crystal particles of the vanadium pentoxide. For example, it is considered that the case in which the site where the lithium ions smoothly go in and go out and the site where the lithium ions do not smoothly go in and go out occur in the layered crystal material. Such a variation is considered to be caused by the structural problem of the layered crystal particles of the vanadium pentoxide and by the involvement of the other material to the layered crystal particles.

The inventors have observed the obtained layered crystal particles in detail. As a result of the observation, the inventors have confirmed that EDOT of a sulfur-containing organic material and its polymer adheres to some layered crystal particles. The inventors have also confirmed that this adhesion occurs at the end face of the layered crystal particle. The end face of the layered crystal particle becomes the inlet and outlet when the lithium ions go in and go out. Naturally, it must greatly affect the property.

It was also confirmed that the adhesion is not always and everywhere the same. Specifically, it has been found that the adhesion itself varies. In the adhesion, not all the layered crystal particles adhere to EDOT, whereby the variation occurs.

It is basically difficult to control the adhesion of the EDOT or its polymer to the layered crystal particles. Originally, a sulfur-containing organic material such as the EDOT is mixed so as to control the structure of the layered crystal particles of the vanadium pentoxide. However, it is not unconceivable that the mixing has adverse affect. In the test stage for roughly knowing the property, the affect is not so noticeable.

It is when the reproducibility of the property is considered that the affect became noticeable. Therefore, how to eliminate the affect of the EDOT became one of the subjects involved with the reproducibility.

The layered crystal material is microscopically a group of fine layered crystal particles. To be strict, it cannot be said that the layered crystal particles are completely the same. Specifically, each of the layered crystal particles is present in a different state. When mass production is considered, the nventors of the present application have thought about the variation in the property of a battery, and further the variation in the particles constituting the layered crystal material. This problem is a significant problem involved with the quality of the battery to be provided.

There is another problem that should also be considered. It is a standard of the reproducibility. Theoretically, the reproducibility must be confirmed if states of the final layered crystal materials are compared for every manufacturing lot. However, the individual reproducibility upon manufacturing the crystal structure that is adaptable in the battery property has not yet been proposed at present. Specifically, how to determine the reproducibility upon manufacturing the crystal structure by using which part of the individual microcrystal has not yet been standardized. To propose the standard for the reproducibility is also one of significant problems.

A further significant problem is that, even if the reproducibility is secured, a low battery property is not preferable. The reproducibility in the state in which the high battery property can be exhibited is needed.

### SUMMARY OF THE INVENTION

The present invention aims to enhance battery properties involved with a positive electrode active material.

The present invention aims to enhance reproducibility of battery properties involved with a positive electrode active material.

The foregoing and other objects and novel features of the present invention will be apparent from the description of the specification of the present application and the attached drawings.

The summary of the representative invention, among the various embodiments of the invention described in the present application, will be explained below.

Specifically, in the present invention, a suspension containing at least a vanadium compound and a plurality of lithium compounds is heated.

The effect obtained by the present invention will briefly be described below.

In the present invention, the property of the suspension containing at least a vanadium compound and a plurality of lithium compounds is specified by the plurality of lithium compounds. Since the property is specified, the distribution ratio of the valence of vanadium ions in the suspension is controlled. Since the suspension, in which the distribution ratio of the valence of vanadium ions is controlled, is heated, e.g., under an inert atmosphere, the distribution ratio of the valence can be maintained. Thus, the reproducibility of the state of the final layered crystal particles can be enhanced.

Specifically, the property of the suspension is specified by the plurality of lithium compounds, whereby the distribution ratio of the valence of vanadium ions by which a high battery property can be obtained can be achieved. Further, the suspension is heated with the distribution ratio of the valence maintained, whereby the reproducibility of the state of the layered crystal particle, which is matched to the distribution ratio of the valence of vanadium by which the high battery property can be obtained, can be secured.

In the present invention, the sulfur-containing organic material cannot be contained in a raw material. Therefore, the adhesion of the layered crystal particle to the EDOT or its polymer, which causes the variation in the property value, can be eliminated, whereby capacity can be increased. Accordingly, the reproducibility of high property can be enhanced.

Since the sulfur-containing organic material such as EDOT is not used, cost can be lowered compared to the case in which the sulfur-containing organic conductive material is used, when the inventors estimate cost at present.

### BRIEF DESCRIPTION OF THE DRAWINGS

- FIG. 1: is an explanatory view showing a pH value that is changed according to the ratio of lithium hydroxide to lithium sulfide, and amount of pentavalent vanadium ions according to a manufacturing method of the present invention;
- FIG. 2: is an explanatory view showing an affect of an inert atmosphere at the time of heating;
- FIG. 3: is a flowchart showing processes of the manufacturing method according to the present invention;
- FIG. 4: is a flowchart showing processes of the manufacturing method according to the present invention;
- FIG. 5: is a flowchart showing processes of the manufacturing method according to the present invention;
- FIG. 6: is a flowchart showing processes of a conventional manufacturing method different from the manufacturing method according to the present invention;
- FIG. 7: is an explanatory view showing a structure of a battery;
- FIG. 8: is an explanatory view showing a ratio of amount of vanadium pentoxide, lithium sulfide, and lithium hydroxide; and
- FIG. 9: is an explanatory view showing discharge energy density at the initial stage of the active material obtained through the manufacturing method according to the present invention.

### DETAILED DESCRIPTION OF THE PREFERRED EMBODIMENTS

An embodiment of the present invention will be explained in detail below with reference to the drawings.

The present invention relates to a technique about a layered crystal material. The layered crystal material is composed of layered crystal particles of vanadium. Examples of the layered crystal material include vanadium pentoxide, etc. The layered crystal material such as vanadium pentoxide is a material which can intercalate lithium ions therein beforehand. Therefore, it can be used as a positive electrode active material of a lithium ion secondary battery, etc.

In the present invention, the sulfur-containing organic material is not used as a raw material. For example, EDOT is not used as a raw material. Therefore, the adhesion of the EDOT or its polymer to the layered crystal structure of vanadium pentoxide caused by the EDOT can completely be eliminated.

Specifically, contingent states, including the case in which the EDOT or its polymer adheres to the layered crystal particles of the vanadium pentoxide and the case in which the EDOT does not adhere to the layered crystal particles of the vanadium pentoxide, can be eliminated. As described above, only the layered crystal particles without adhesion of the EDOT or its polymer, are allowed to be present, whereby the capacity can be increased and the reproducibility can be enhanced.

In the present invention, a plurality of lithium sources are used with respect to the vanadium compound. For example, an oxidation/reduction lithium salt is used as a first lithium compound, while a non-oxidation/reduction lithium salt is used as a second lithium compound. The oxidation/reduction lithium salt is oxidizable and reducible, and it acts as a reducing agent in the suspension. The non-oxidation/reduction lithium salt is not oxidizable and reducible.

The vanadium compound, the oxidation/reduction first lithium compound, and non-oxidation/reduction second lithium salt are suspended in an aqueous solvent, whereby the property of the suspension must be specified. The pH value can be used as the property, for example.

On the other hand, it has been known that the pH value is involved with the condensation state of the vanadium in the aqueous solution. In general, the vanadium becomes oxo-cluster in the aqueous solution, and it takes various condensation forms according to the pH value. In view of this, the present inventors have conceived that the distribution of the valence of vanadium ions can be controlled by specifying the property (liquid physical property) of the suspension by the pH value.

The pH value of the aqueous solution including water that is obtained by dissolving the first lithium compound, serving as the oxidation/reduction lithium salt, into the aqueous solvent is obtained beforehand. Further, the pH value of the aqueous solution including water that is obtained by dissolving the second lithium compound, serving as the non-oxidation/reduction lithium salt, into aqueous solvent is obtained beforehand. The pH value of the suspension obtained by dissolving both of them and the vanadium compound must be obtained from the pH values described above. The pH value can be confirmed by a pH meter, or more simply, by a litmus paper.

The pH value of the oxidation/reduction lithium salt and the pH value of the non-oxidation/reduction lithium salt can be obtained on the basis of the result measured by the means different from that described above. Specifically, if the result can be converted into the measured pH value or the determination reference indicated by the litmus paper, the pH value of the oxidation/reduction lithium salt and the non-oxidation/reduction lithium salt could be determined.

The oxidation/reduction lithium is defined to be the one that acts as an oxidizer oxidizing the opposite element or acts as a reducing agent reducing the opposite element, when it is dissolved into water. The non-oxidation/reduction lithium is defined to be the one that has no oxidation/reduction performance when it is dissolved into water. The oxidation/reduction of the liquid can be generally determined by an ionization tendency or oxidation/reduction potential. In the present invention, hydrogen sulfide that is produced by dissolving Li₂S into water acts as a reducing agent so as to reduce pentavalent vanadium.

In the present invention, the oxidation/reduction lithium salt serving as the first lithium compound and the non-oxidation/reduction lithium salt serving as the second lithium compound are mixed with a predetermined ratio. In this manner, the property of a suspension when the vanadium compound and the plurality of lithium compounds are suspended in an aqueous solvent is controlled. Specifically, the property of the solvent into which the vanadium compound is suspended is specified.

For example, the vanadium compound and the plurality of lithium compounds are suspended in an aqueous solvent, and its property is specified. The property to be specified is the pH value and the like.

According to the manufacturing method of the present invention, the raw material is suspended and then heated. However, in the manufacturing method according to the present invention, the valence distribution of vanadium is almost maintained even if the heating is continued after the heating and dissolution. The reason is estimated to be that the raw materials are heated under an inert atmosphere as described later.

Since the property of the liquid in which the vanadium compound is suspended is controlled, the valence of the vanadium compound that is dissolved into an aqueous solvent can be controlled. For example, the number of the pentavalent vanadium ions can be made larger than the number of the vanadium ions having four or less valences.

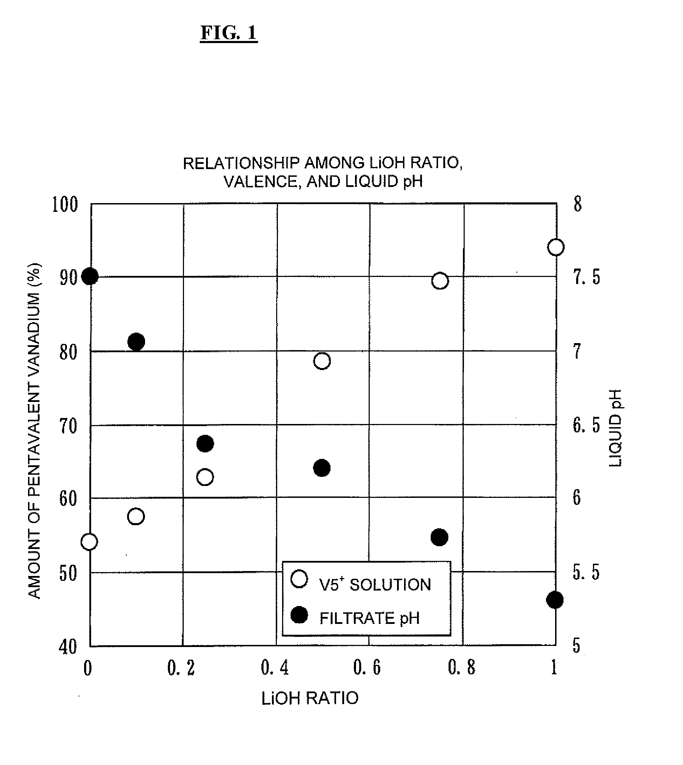

The case in which the vanadium pentoxide is used as the vanadium compound, the lithium sulfide is used as the oxidation/reduction lithium source, and the lithium hydroxide is used as the non-oxidation/reduction lithium source is considered. In this case, when the ratio of the lithium hydroxide is 25 % in a molar ratio, the pH value of the filtrate becomes 6.37 as shown in FIG. 1. The amount of pentavalent vanadium ions is 62.7 % in the molar ratio.

FIG. 1 shows the change in the pH value and the amount of pentavalent vanadium ions according to the molar ratio of the lithium hydroxide and the lithium sulfide. It has been clearly found from FIG. 1 that the amount of the pentavalent vanadium ions changes according to the pH value of the filtrate of the suspension after the heating. From the tendency indicated in FIG. 1, it can be understood that the ratio of the pentavalent vanadium ions in the liquid can be made larger than the vanadium ions having four or less valences by appropriately adjusting the pH value of the suspension. Specifically, the distribution ratio of the valence can be controlled with a molar ratio (mol %).

When the lithium hydroxide is mixed with the ratio of 10 % with respect to the lithium sulfide, the pH value is 7.06, and the amount of the pentavalent vanadium ions is 57.5 mol %. When the lithium hydroxide is mixed with the ratio of 50 % with respect to the lithium sulfide, the pH value is 6.2, and the amount of the pentavalent vanadium ions is 78.4 mol %. When the lithium hydroxide is mixed with the ratio of 75 % with respect to the lithium sulfide, the pH value is 5.72, and the amount of the pentavalent vanadium ions is 89.4 mol %.

As described above, the plurality of lithium compounds are dissolved into the aqueous solvent in such a manner that the pH value of the filtrate of the suspension, i.e., the suspension after the heating, assumes a predetermined value, whereby the valence of the vanadium ions in the filtrate can be controlled.

Usable vanadium compounds include, in addition to vanadium pentoxide (V₂O₅), vanadium oxides such as VO₂, VO_{0.9}, V₆O₁₃, V₄O₉, V₇O₃, V₂O₃, etc.

Examples of the oxidation/reduction lithium compound include the lithium sulfide described above, as well as lithium selenide and telluride lithium. The oxidation/reduction lithium compound can be used alone, or a plurality of lithium compounds can be mixed. When the reduction of sulfur is required, in particular, the lithium sulfide can be mixed.

Examples of the non-oxidation/reduction compound include, in addition to the lithium hydroxide, lithium acetate, lithium carbide, lithium chloride, lithium nitride, lithium azide, etc. The non-oxidation/reduction lithium compounds can be used alone or a plurality of compounds can be mixed.

An aqueous solvent can be used in order to dissolve the vanadium compound. In the present specification, the aqueous solvent includes water. A solvent mixture, such as water and alcohol can be used, if it is usable. An organic solvent, such as alcohol, that has excellent affinity to water can be used alone. On the other hand, a non-aqueous solvent cannot be used.

In the present invention, the property of the suspension into which the vanadium compound is mixed is adjusted by the mixture of the oxidation/reduction lithium source and the non-oxidation/reduction lithium source. However, satisfactory result in adjusting the property by using acid or alkali alone could not be obtained within the range of the test made by the present inventors. For example, a contamination of the added element is produced. Further, since the raw materials are suspended, and then heated, gas is produced upon the heating, which is non-preferable.

As described above, the vanadium compound and a plurality of lithium compounds are suspended in an aqueous solution, and the pH value of the solution is adjusted, whereby the ratio of the distribution of the valence of vanadium ions is controlled. After the suspension, the suspension is heated. The suspension is heated under an inert atmosphere. The inventors have found that heating the suspension in the air as is conventionally done is non-preferable. The inventors have also found that the distribution of the valence of vanadium ions in the suspension to be heated greatly varies under air atmosphere.

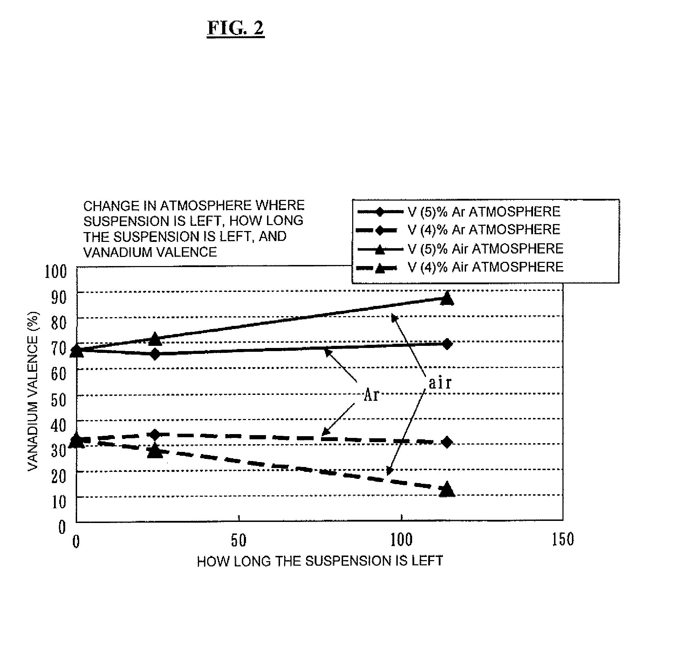

FIG. 2 shows the affect under heating atmosphere. The axis of abscissa indicates how long the suspension is left, while the axis of ordinate indicates the ratio of the pentavalent vanadium ions and tetravalent vanadium ions in terms of the molar ratio (mol %). In the Figure, the solid line indicates the ratio of the pentavalent vanadium ions. The broken line indicates the ratio of the tetravalent vanadium ions. The ratio of the pentavalent vanadium ions and the ratio of the tetravalent vanadium ions are in a complementary relation, and the ratio of the pentavalent vanadium ions and the ratio of the tetravalent vanadium ions total to about 100 mol %. For example, when the one is 30 mol %, the other becomes 70 mol %.

In the case of FIG. 2, the affect of the time the suspension is left is determined how long the suspension that is refluxed through the application of heat is left. The suspension is heated and left at room temperature. As apparent from the Figure, the ratio of the pentavalent vanadium ions is about a little less than 70 mol %, e.g., 68 mol % at the beginning. The ratio of the tetravalent vanadium ions is about a little over 30 mol %, e.g., 32 mol %.

It is understood that the distribution ratio of the pentavalent vanadium ions and the tetravalent vanadium ions changes according to how long the suspension, which is refluxed through the application of heat, is left under air atmosphere. For example, when the suspension is left for 50 hours, the amount of the pentavalent vanadium ions increases to 78 mol %. On the other hand, the amount of the tetravalent vanadium ions decreases to 28 mol %, for example. It is confirmed that the increase or decrease is changed almost linearly as shown in FIG. 2.

The heating time in the present invention is 24 hours. When the heating time is 25 hours, the ratio of the vanadium ions, which is 68 mol % at the beginning, increases to about 72 mol %. The distribution ratio of the tetravalent vanadium ions complementarily decreases to about 28 mol %. The ratio of the change in the distribution ratio is as follows. Specifically, the distribution ratio of the pentavalent vanadium ions changes by about a little less than 6 % (≈ 4/68). It was confirmed that the distribution ratio of the tetravalent vanadium ions changes by about a little less than 13 % (≈ 4/32).

Under the conventional air atmosphere, the great variation in the valence of the vanadium ions is produced even when the suspension is heated and refluxed for about 24 hours. The inventors have considered that some measures should be taken. Hence, the inventors have arried out the heating and reflux under an argon gas atmosphere. The almost straight line in the center of FIG. 2 indicates the result. Specifically, it was confirmed that, under the argon atmosphere, the ratio of the distribution of the valence of the pentavalent vanadium ions and the tetravalent vanadium ions was rarely changed from the ratio at the beginning.

For example, when the suspension was left for 25 hours, the ratio of the pentavalent vanadium ions was changed from about 68 mol % at the beginning to about 66 mol %. Specifically, the change is suppressed to about a little less than 3 %. Further, it was confirmed that the amount of the tetravalent vanadium ions was changed from about 32 mol % at the beginning to about 34 mol %. Specifically, the ratio of the change decreased to about 6 %. According to the experiment made by the inventors, the same tendency was observed even under another rare gas atmosphere, such as He or the like. The same tendency was also observed even under a nitrogen atmosphere.

In the case of nitrogen, there is a report that a very slight amount of nitrogen reacts with vanadium. However, the affect caused by the reaction is not observed when the suspension is refluxed through the application of heat for about 25 hours as described above, and the same result as the case of argon was confirmed.

As explained above, in the present invention, the sulfur-containing organic material such as EDOT is not used as a raw material. Further, a plurality of lithium ion sources are dissolved together with a vanadium compound. Moreover, the suspension in which the above-mentioned compounds are dissolved is heated under an inert atmosphere. The present invention provides a method that is advantageous for increasing the capacity of the target layered crystal particle of vanadium pentoxide, and for forming the target layered crystal particles with excellent reproducibility by combining these features.

Specifically, the present invention can be understood as the one in which the non-use of the sulfur-containing organic conductive polymer, the use of a plurality of lithium sources, and heating under an inert atmosphere afterward are combined.

The technique of enhancing the reproducibility in manufacturing the layered crystal particle can be obtained as described above. The inventors have conceived that the reproducibility of the layered crystal material can be determined by the first discharge energy. Additionally, the reproducibility might be determined by a cycle characteristic or the like.

However, in the case of the determination according to the cycle characteristic, the collapse phenomenon of the layered crystal particle due to the repeated go-in and go-out of lithium ions between the layers affects the reproducibility. Therefore, the present inventors have considered that the determination of the reproducibility in a strict sense cannot be achieved.

The first discharge energy is naturally the energy in the initial state when an electrode is formed by using the active material. Therefore, it is in direct relation to the initial state of the active material. Specifically, it is supposed that the first discharge energy is in relation to the reproducibility. In view of this, in the present invention, the reproducibility of the vanadium pentoxide, which is the layered crystal material usable for the active material, is evaluated by employing the first discharge energy. The present invention also proposes, for the first time, that the confirmation of the reproducibility is evaluated by the first discharge energy.

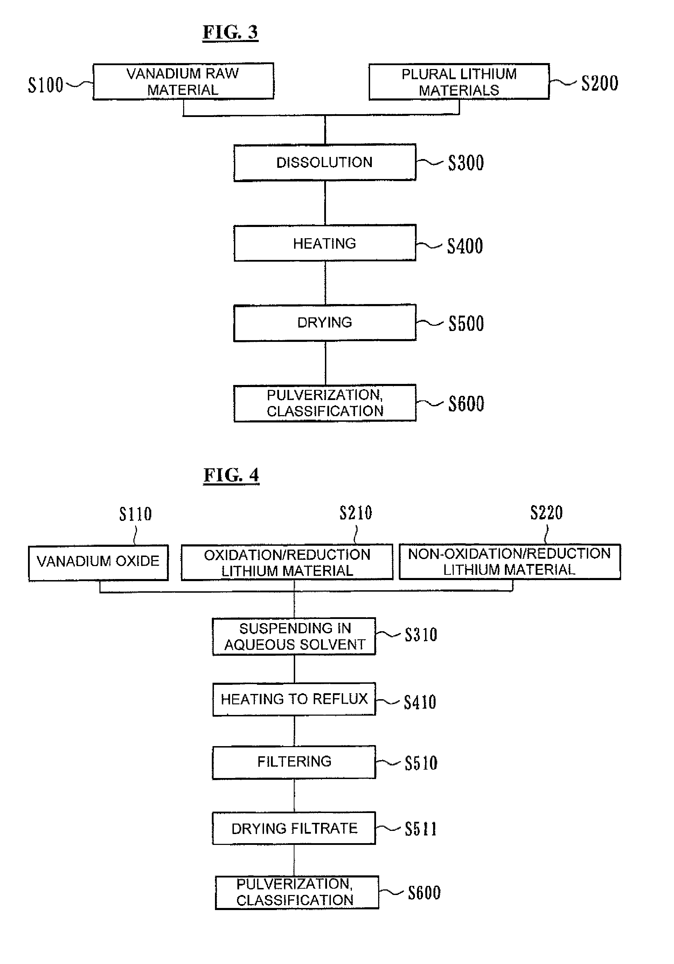

The method of manufacturing the electrode material according to the present invention will be explained with reference to the flowcharts shown in FIGS. 3, 4 and 5. In the present invention, a vanadium compound is prepared as a vanadium material at Step S100 in FIG. 3. Further, a plurality of lithium compounds are prepared as the plurality of lithium materials at Step S200.

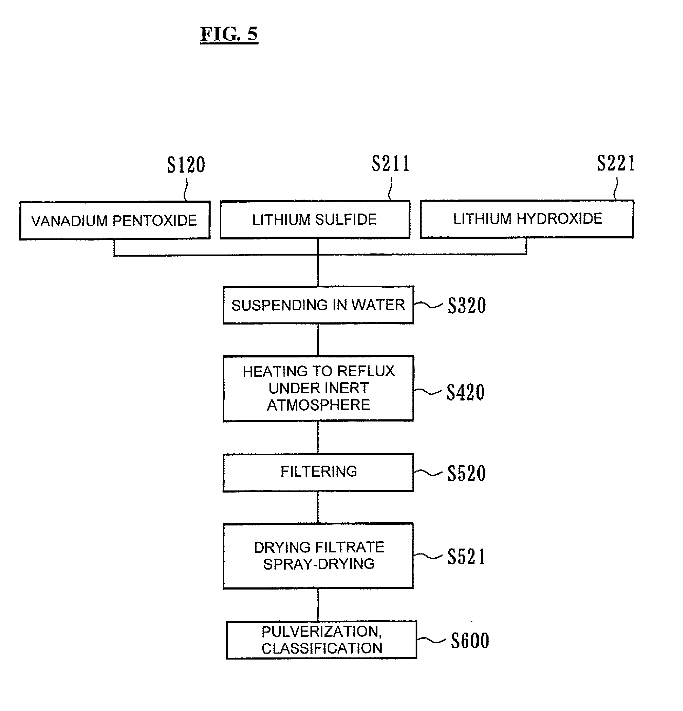

A vanadium oxide is prepared as indicated in Step S110 in FIG. 4 as the vanadium compound prepared at Step S 100. Vanadium pentoxide, for example, is prepared as indicated in Step S 120 in FIG. 5 as the vanadium oxide.

For example, an oxidation/reduction lithium and non-oxidation/reduction lithium are prepared, as indicated in steps S210 and 220 in FIG. 4, as the plurality of lithium compounds prepared at Step S200. Lithium sulfide, for example, is prepared as indicated at Step S211 in FIG. 5 as the oxidation/reduction lithium. Lithium hydroxide is prepared, for example, as indicated at Step S221 in FIG. 5 as the non-oxidation/reduction lithium.

The vanadium compound and the plurality of lithium compounds are dissolved at Step S300. For example, they are suspended in an aqueous solvent as indicated at Step S310 in FIG. 4. Water can be used as the aqueous solvent as indicated at Step S320 in FIG. 5.

After the vanadium compound and the plurality of lithium compounds have been suspended and dissolved in the aqueous solvent as described above, the suspension is heated at Step S400. At the time of the heating, the suspension can be refluxed through the application of heat as indicated at Step S410 in FIG. 4. Specifically, as indicated at Step S420 in FIG. 5, the suspension can be refluxed through the application of heat under an inert atmosphere.

The inert atmosphere can be achieved by changing the air atmosphere at the time of the heating to nitrogen atmosphere or rare gas atmosphere such as Ar or the like. At the time of the heating, the suspension can be left for a predetermined time at a predetermined temperature. For example, the suspension is left for 24 hours at 75 °C.

Thereafter, as indicated at Step S500 in FIG. 3, the suspension is heated so at to be dried. For example, as shown in FIG. 4, the suspension is filtered at Step S510, and the filtrate is dried at Step S511. The suspension can be dried such that the filtrate filtered at Step S520 in FIG. 5 is subject to spray drying at Step S521. Of course, the suspension can be concentrated and dried. However, the crystal state is changed afterward depending on the manner of applying heat at the time of the concentration. Therefore, the manner of applying heat is difficult. The spray drying is preferable. Since the suspension is dried under the sprayed state, the change in the structure of the vanadium involved with the concentration can be prevented.

The material thus obtained can be pulverized and classified as indicated at Step S600 in FIGS. 3, 4 and 5. A ball mill or the like is used for pulverization. The obtained materials are classified into those having particle diameter whose upper limit is 50 µm.

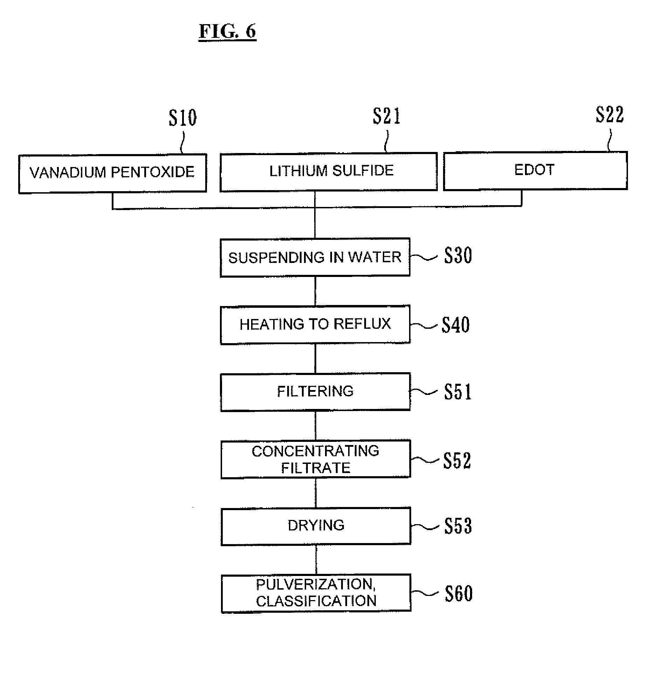

For comparison, a conventional method of manufacturing a layered crystal material of vanadium pentoxide is shown in FIG. 6. Vanadium pentoxide is prepared as a vanadium compound at Step S10. Lithium sulfide is prepared as a lithium compound at Step S21. 3,4-ethylenedioxythiophene (EDOT), for example, is prepared as a sulfur-containing organic material at Step S22.

Thereafter, at Step S30, three types of raw materials including the EDOT are suspended in water. The adjustment of the property of the suspension such as the pH value is not carried out at Step S30. The adjustment of the property of the suspension is not carried out at least deliberately.

In the manufacturing method according to the present invention, the sulfur-containing organic material such as EDOT is not used as a raw material as shown in FIGS. 3, 4 and 5. This can perfectly prevent the crystal structure from becoming coarse due to the polymerization of the microcrystal structure caused by the EDOT.

Different from the conventional manufacturing method, in the present invention, the property of the suspension is adjusted so as to control the ratio of the valence of vanadium ions. Specifically, the valence of the vanadium ions in the filtrate of the suspension is controlled.

In the conventional manufacturing method, the suspension is refluxed through the application of heat at Step S40. For example, the suspension is refluxed through the application of heat for 24 hours at 75 °C. The suspension is heated under air atmosphere. It has not been found out that adverse affects are brought by heating the suspension under air atmosphere.

On the other hand, in the manufacturing method according to the present invention, the suspension is refluxed through the application of heat under the inert atmosphere such as nitrogen or Ar as indicated at Step S420 in FIG. 5, which is different from the conventional method. By employing the technique described above, the suspension can be heated without changing the ratio of the valence of the vanadium ions in the suspension that is controlled on the basis of the adjustment of the property according to the plurality of lithium compounds.

The concentration step of the filtrate is applicable to any methods, as long as a compound in liquid is solidified according to this step. In the conventional manufacturing method, the filtrate is refluxed through the application of heat, and then the suspension thereof is filtered at Step S51. Thereafter, the filtrate is concentrated at Step S52, and dried at Step S53. The concentration at Step S52 is carried out under reduced pressure.

This is because the application of heat is suppressed and the time taken for the concentration is shortened by carrying out the concentration under reduced pressure. Thereafter, pulverization and classification are performed as indicated at Step S60, whereby the manufacture of the layered crystal material of vanadium pentoxide is completed.

However, in the concentration under reduced pressure, the pulverization and classification are required, which increases the number of processes. In view of this, the present invention recommends the spray drying as indicated at Step S521 in FIG. 5. The pulverization and classification can be performed at the next Step S600. By employing the spray drying, the pulverization and classification at the next Step S600 can be omitted. Therefore, the efficient manufacture having no pulverization/classification step is possible. The conventional method does not employ the spray drying for drying the filtrate. This is because there is no reason found out for positively employing the spray drying.

The spray drying means the technique in which reaction solution is sprayed through a nozzle, and the resultant is dried in a drying furnace. The drying condition is such that the temperature is desirably not less than 100 °C and less than 500 °C. When the temperature is less than 100°C, the filtrate is not sufficiently dried, so that it cannot be obtained as a powder. On the other hand, when the temperature exceeds 500 °C, the crystal growth progresses, so that the property is deteriorated, thus non-preferable.

As described above, the layered crystal material of vanadium pentoxide can be manufactured with excellent reproducibility according to the manufacturing method of the present invention.

Subsequently explained is the case in which the layered crystal material of vanadium pentoxide manufactured by the manufacturing method according to the present invention is used as an active material, more specifically, as a positive electrode active material.

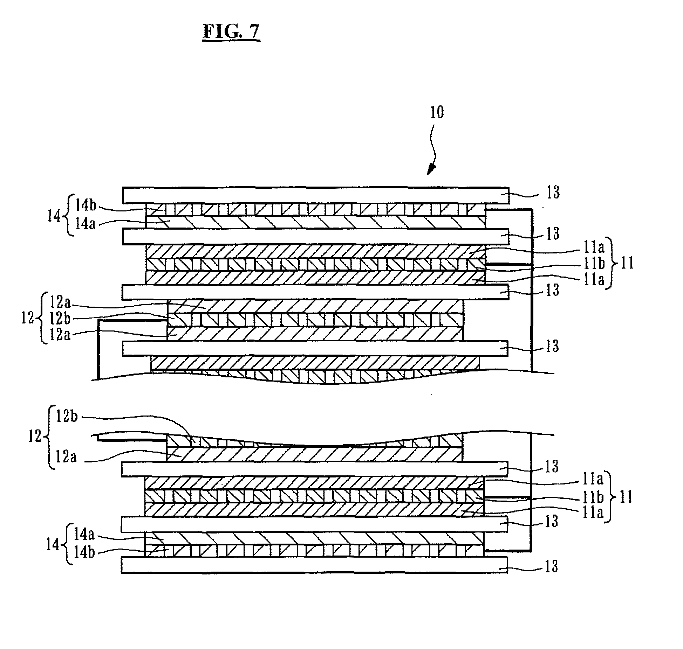

The lithium ion secondary battery 10 has the structure shown in FIG. 7, for example. The lithium ion secondary battery 10 has negative electrodes 11 and positive electrodes 12 that are laminated alternately. A separator 13 is provided between each of the negative electrodes 11 and each of the positive electrodes 12. The negative electrodes 11 are provided at the outermost parts of a laminate unit having a plurality of negative electrodes 11 and the positive electrodes 12. Specifically, the structure in which the positive electrodes 12 and the negative electrodes 11 are laminated alternately with the separators 13 provided therebetween is sandwiched between both negative electrodes 11. Thus, an electrode unit is formed.

Lithium electrodes 14 are provided at the outside of the outermost layers of the negative electrodes 11 arranged at the outermost parts. Each of the lithium electrodes 14 has, for example, a current collector 14b and a metal lithium 14a mounted on the current collector 14b with a predetermined thickness. The current collector 14b is a porous member formed with holes. Lithium ions eluted from the lithium electrode 14 is pre-doped into the negative electrode 11.

Each of the negative electrodes 11 constituting the electrode unit has a current collector 11b and a negative electrode active material 11a provided on the current collector 11b with a predetermined thickness. The current collector 11b is a porous member formed with holes. Each of the positive electrodes 12 has a current collector 12b and a positive electrode active material 12a provided on the current collector 12b with a predetermined thickness. The current collector 12b is a porous member formed with holes.

The electrode unit having the aforesaid structure is impregnated into electrolytic solution, whereby the lithium ion secondary battery 10 is constituted.

The negative electrode active material and the positive electrode active material are respectively mixed with binder, conductive assistants, and water so as to be formed into a slurry. The active material formed into the slurry is coated onto the corresponding current collector with a predetermined thickness by a die coater or the like. Then, the slurry is dried, whereby both electrodes serving as the negative electrode 11 and the positive electrode 12 are formed.

The materials described below can be used for the negative electrode active material. Examples of the materials include a lithium-intercalated carbon material, etc., in the case of a non-aqueous lithium ion secondary battery. Examples of the carbon materials include graphite, non-graphite material, polyacene-based material, etc. Examples of the non-graphite material include hard carbon material, etc. Examples of the polyacene-based material include PAS that is an insoluble and infusible base and has a polyacene skeletal structure. The negative electrode active materials allow lithium ions to be reversibly doped.

When the carbon material or the like that allows lithium ions to be doped or de-doped is used, the lithium electrode is separately provided in order to pre-dope the lithium ions from the lithium electrode to the negative electrode at the initial charging. Examples of the lithium ion source include metal lithium or lithium-aluminum alloy. Specifically, a material that contains at least lithium elements and can supply lithium ions can be used.

In the present invention, the term "doping (dope)" involves "occlude", "carry", "absorb" or "insert", and specifically a phenomenon where lithium ions and/or anions enter the positive electrode active material or the negative electrode active material. The term "de-doping (de-dope)" involves "release" and "desorb", and specifically a phenomenon where lithium ions or anions desorb from the positive electrode active material or the negative electrode active material.

The layered crystal material of vanadium pentoxide manufactured by the manufacturing method according to the present invention is used as the positive electrode active material. For example, it is used as the positive electrode active material of the non-aqueous lithium secondary battery shown in FIG. 7.

It is preferable that the lithium ions are doped in a ratio of 0.1 to 6 in a molar ratio with respect to the metal oxide of vanadium pentoxide. When the doping amount of the lithium ions is less than 0.1 in a molar ratio, the doping effect cannot sufficiently be exhibited. On the other hand, when the doping amount of the lithium ions exceeds 6, the metal oxide might be reduced to metal, thus non-preferable.

The plurality of lithium sources described above can be used as a lithium ion source, for example. Examples of the oxidation/reduction lithium source include lithium sulfide. Examples of the non-oxidation/reduction lithium source include lithium hydroxide. The present invention is characterized in that both of the oxidation/reduction lithium source and the non-oxidation/reduction lithium source are used as a lithium ion source.

Polyvinylidene fluoride (PVdF) or the like can be used as the binder. The binder described above is preferably mixed with the conductive particles described later to form slurry. The slurry is coated onto the conductive base, which is the current collector, with a predetermined thickness, whereby the electrode is formed.

Examples of the conductive assistant are conductive particles including conductive carbon such as Ketchen black, metal such as copper, iron, silver, nickel, palladium, gold, platinum, indium, tungsten, etc. It is to be noted that the material that is stable for the oxidation/reduction reaction of the electrode active material is selected. The conductive particle can be contained in a ratio of 1 % to 30 % per weight of the metal oxide.

Lithium alloy can also be used as a lithium electrode instead of the metal lithium. Examples of the lithium alloy include lithium-based metal material such as Li-Al alloy. Other examples of the lithium alloy include intermetallic compound material of a metal and a lithium metal such as tin or silicon, lithium compound such as lithium nitride, or the like.

The conductive base that exhibits conductivity at the surface in contact with the positive electrode active material and the negative electrode active material is used for the current collector, for example. Examples of the base include a conductive material such as metal, conductive metal oxide, conductive carbon, etc. In particular, the base can be formed of copper, gold, aluminum, or alloy of these metals, or conductive carbon. When the base is made of a non-conductive material, the base is coated with a conductive material for use. It is to be noted that a material that is stable for the oxidation/reduction reaction of the electrode active material is selected.

The non-aqueous solvents described below can be used for the electrolyte solution into which the laminate unit having the aforesaid structure is impregnated. Examples of the non-aqueous solvent include chain carbonate, cyclic carbonate, cyclic ester, nitrile compound, acid anhydride, amide compound, phosphate compound, amine compound, etc. More specifically, examples thereof include ethylene carbonate, diethyl carbonate (DEC), propylene carbonate, dimethoxyethane, γ-butyloractone, N-methyl pyrrolidone, N,N'-dimethyl acetoamide, acetonitrile, mixture of propylene carbonate and dimethoxyethane, mixture of sulfolane and tetrahydrofuran, etc.

Examples of the electrolyte dissolved into the electrolyte solution include lithium salt such as CF₃SO₃Li, C₄F₉SO₈Li, (CF₃SO₂)₂NLi, (CF₃SO₂)₃CLi, LibF₄, LiPF₆, LiClO₄, etc. The solvent into which the electrolyte is dissolved is non-aqueous solvent. The electrolyte layer interposed between the positive electrode and the negative electrode can be a polymer gel (polymer gel electrolyte) containing non-aqueous solution of the electrolyte. Since the electrolyte is dissolved into the water of layered crystal material of vanadium pentoxide, the use of the non-aqueous solvent is demanded as described above.

In the above description, the present invention can be understood as the one in which the non-use of the sulfur-containing organic material, the use of a plurality of lithium sources, and heating under the inert atmosphere afterward are combined as a series of process.

On the other hand, the present invention can be understood as follows from another aspect. Specifically, the present invention can be understood as an invention in which the property of the solution into which the vanadium compound is dissolved is controlled by the plurality of lithium sources in order to control the distribution ratio of the valence of the target vanadium ions. Examples of the invention according to another aspect include the control of the valence of the pentavalent vanadium ions and tetravalent vanadium ions as described above.

The present invention can be understood, from still another aspect, as an invention of a heating method with the adjusted ratio of the valence in the suspension maintained. Examples of the invention according to still another aspect include the heating and reflux under the inert atmosphere as described above.

The present invention can further be understood as an invention having the feature of the control of the valence of ions by the plurality of lithium ion sources and the feature of the heating under the inert atmosphere.

When the invention is understood as described above, the invention can specifically be understood as described below.

Specifically, the present invention discloses a method of controlling a valence of a metal in a layered crystal that can be used as a positive electrode active material, wherein suspension is used, the suspension including at least a vanadium compound, and a plurality of lithium compounds for specifying a property of the suspension into which the vanadium compound is dissolved. In the method of controlling a valence, the property is specified by the pH value of the suspension into which the vanadium compound is dissolved.

In the method of controlling a valence, the plurality of lithium compounds are the combination of an oxidation/reduction lithium salt and a non-oxidation/reduction lithium salt. The oxidation/reduction lithium salt is defined to be the one that acts as an oxidizer oxidizing the opposite element or acts as a reducing agent reducing the opposite element, when it is dissolved into water. In the present invention, the oxidation/reduction lithium salt acts as a reducing agent. The non-oxidation/reduction lithium salt is defined to be the one that has no oxidation/reduction performance when it is dissolved into water.

In the method of controlling a valence, the oxidation/reduction lithium compound is a lithium sulfide. In the method of controlling a valence, the non-oxidation/reduction lithium compound is at least any one selected from the group consisting of lithium hydroxide, lithium acetate, lithium carbide, lithium chloride, lithium nitride, and lithium azide. In the method of controlling a valence, the oxidation/reduction lithium compound is a lithium sulfide, and the non-oxidation/reduction lithium compound is at least any one selected from the group consisting of lithium hydroxide, lithium acetate, lithium carbide, lithium chloride, lithium nitride, and lithium azide. In the method of controlling a valence, the oxidation/reduction lithium compound is a lithium sulfide, and the non-oxidation/reduction lithium compound is a lithium hydroxide.

In any one of the methods of controlling a valence described above, in the suspension, pentavalent vanadium ions are present more than tetravalent vanadium ions. In the method of controlling a valence, the pH value of the suspension when the vanadium compound is dissolved is 5.7 or more. In the method of controlling a valence, a molar ratio indicates that the pentavalent vanadium ions are present more than tetravalent vanadium ions.

In the method of controlling a valence, the mixture ratio of the lithium sulfide and the lithium hydroxide is such that the lithium hydroxide is 3 mol % or more and 97 mol % or less with respect to the lithium sulfide.

In a method of maintaining a valence of vanadium ions, whose valence is controlled, in a layered crystal that can be used as a positive electrode active material, the ratio of the valence of vanadium ions in a suspension containing a vanadium compound and a lithium compound is controlled, and then the suspension is heated under an inert atmosphere. In the method of maintaining a valence, the valence of the vanadium is controlled in such a manner that a plurality of lithium compounds are dissolved into aqueous solvent into which the vanadium compound is dissolved so as to adjust the property.

In any one of the methods of controlling a valence described above, heating under the inert atmosphere means heat is applied so as to achieve reflux. In the method of controlling a valence, nitrogen or rare gas such as He or Ar is used for the inert atmosphere.

### EXAMPLES

### Fabrication of positive electrode

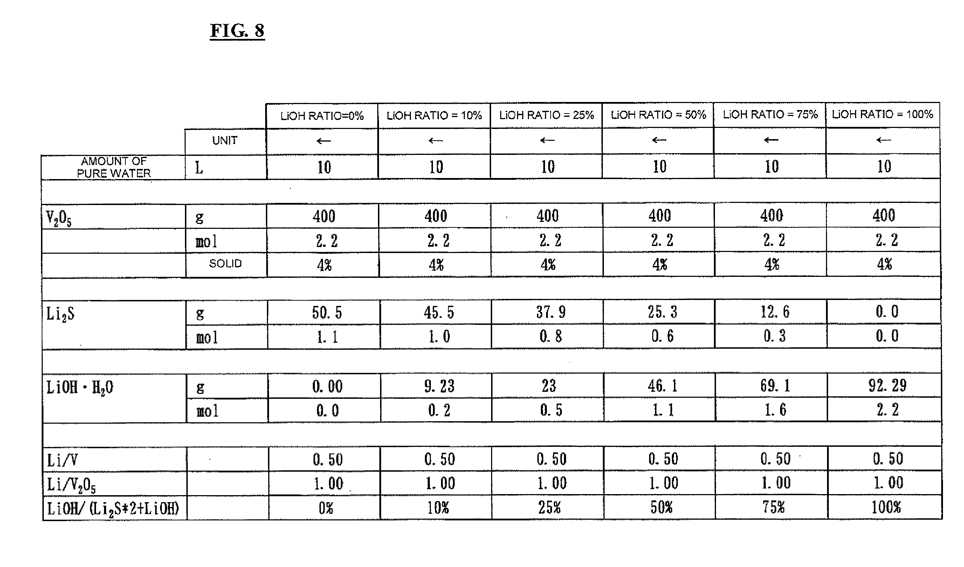

In this example, 400 g of vanadium pentoxide was used as a vanadium source. Lithium sulfide and lithium hydroxide were used as the plurality of lithium sources. In this example, the ratio of the lithium sulfide and the lithium hydroxide was varied. For example, the tests were carried out with the respective molar ratios of the lithium hydroxide to the lithium sulfide described below. Specifically, the molar ratio was 0 % in Comparative Example 1; 10 % in Example 1; 25 % in Example 2; 50 % in Example 3, 75 % in Example 4; and 100 % in Comparative Example 2. FIG. 8 shows the amount of the vanadium pentoxide, lithium sulfide, and lithium hydroxide as well as the molar ratios described above.

The vanadium pentoxide, lithium sulfide, and lithium hydroxide were suspended in 10 liter of water serving as the aqueous solvent. The thus formed suspension was heated and stirred for 24 hours so as to reflux. The suspension was heated and stirred so as to reflux under an inert atmosphere, Specifically, Ar (argon) was fed to the suspension for 30 minutes at 400 ml/min., and a gas bubbling was performed to replace air. After the inert atmosphere was formed as described above, the suspension was heated to 75 °C. The suspension was heated and stirred for 24 hours so as to reflux at 75 °C.

After the lapse of 24 hours, the suspension was cooled to room temperature that was 20 °C. After cooling, the suspension was filtered to remove residues. The filtrate was subject to the spray drying under the condition in which the temperature of hot air to a spraying section of a furnace was 230 °C, whereby black powder material was obtained. It was confirmed that the obtained powder material had a particle distribution having D50 of 5 µm. In this manner, the layered crystal material of vanadium pentoxide, which could be used as a positive electrode active material, was obtained.

90 wt. % of the layered crystal material of vanadium pentoxide was mixed with 5 wt. % of conductive carbon black and 5 wt. % of polyvinylidene fluoride (PVDF), and N-methyl pyrrolidone (NMP) was used as solvent to form slurry. The thus obtained slurry was coated onto a porous aluminum foil by a doctor blade method in such a manner that the mixture density per surface became 2 g/cm³. The slurry was coated on both surfaces or one surface of a copper current collector having through-holes, and the resultant was molded. The resultant was cut in a size of 24 mm x 36 mm to obtain positive electrodes.

### Fabrication of negative electrode

Graphite and PVDF serving as a binder were mixed at a weight ratio of 94 : 6 so as to prepare slurry that was diluted with NMP. The thus formed slurry was coated onto both surfaces or one surface of a copper current collector having through-holes in such a manner that the mixture density per surface became 1.7 g/cm³. The resultant was molded, and cut in a size of 26 mm x 38 mm to obtain negative electrodes.

### Structure of cell

Twelve positive electrodes and thirteen negative electrodes (two of them had one coated surface) thus obtained were laminated through a polyolefin-based microporous film serving as a separator. A lithium electrode, which had metal lithium adhered onto a stainless porous foil through a separator, was arranged at the outermost part, whereby a three-electrode laminate unit composed of the positive electrodes, negative electrodes, lithium electrodes, and separators were fabricated. The three-electrode laminate unit was packaged with an aluminum laminate film, and electrolytic solution in which lithium borofluoride was dissolved in 1 mol/l at a weight ratio of ethylene carbonate (EC)/diethyl carbonate (DEC) = 1/3 was injected therein.

### Measurement of discharge energy

The cells according to Examples 1 to 4 and Comparative Examples 1 and 2 fabricated as described above were left for 20 days. Then, when one cell of them was disassembled, no metal lithium remained. It was confirmed from this result that the lithium ions in a required amount were carried and doped beforehand into the negative electrodes.

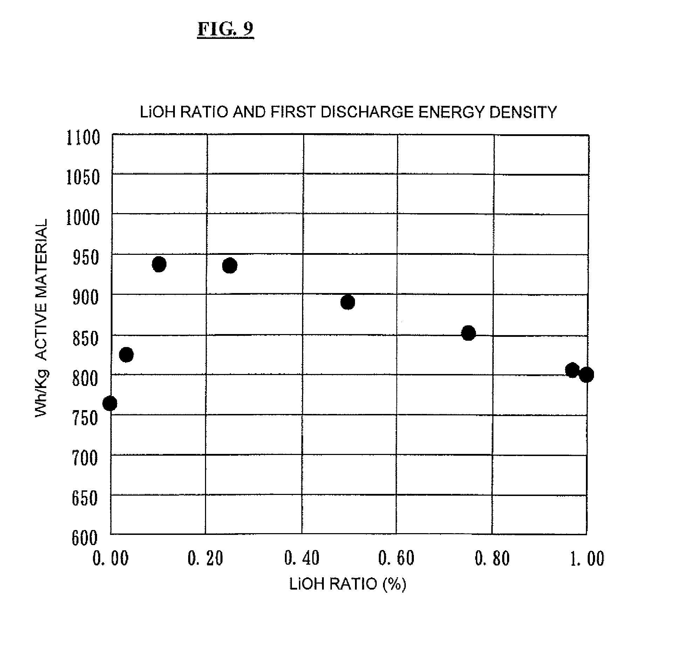

One cell of the remaining cells was subject to the charging/discharging cycle test. The cell was charged in a constant-current constant-voltage (CC-CV) charging method. Specifically, the cell was charged with 0.1 C and 4.1 V for 30 hours. The cell was discharged with a constant current (CC) discharging method at 0.05 C and 1.35 V. The lithium ion secondary battery having the aforesaid structure was used to measure the first discharge density. FIG. 9 shows the result.

As shown in FIG. 9, it can be known that the first discharge density changed according to the ratio of the lithium hydroxide to the lithium sulfide. When the lithium hydroxide was 25 mol % with respect to the lithium sulfide in particular, the discharge energy density assumed 930 Wh/kg. When the ratio of the lithium hydroxide was 10 mol %, the discharge energy density was almost the same as that in case where the ratio of the lithium hydroxide was 25 mol %. When the ratio of the lithium hydroxide was 3 mol %, sufficient energy density was obtained, although the energy density decreased to 820 Wh/kg.

When the ratio of the lithium hydroxide was 50 mol %, the first discharge energy density was 888.9 Wh/kg. When the ratio of the lithium hydroxide was 75 mol %, the first discharge energy density was 851.6 Wh/kg. When the ratio of the lithium hydroxide was 97 mol %, the first discharge energy density was 805 Wh/kg.

It was confirmed from the above that the valence of vanadium needed for the structure of the required layered crystal particle could be controlled by mixing two types of lithium sources. Therefore, a high energy density was obtained. Examples 1 to 4 and the Comparative Examples 1 and 2 were conducted under the inert atmosphere. The variation in the capacities of ten trial products was within ±5 % respectively.

On the other hand, the similar positive electrodes were formed ten times under normal atmosphere. When two types of the lithium sources were used, high energy density could be obtained. However, the variation in the capacities was ±20 %. Therefore, it was confirmed that the heating under the inert atmosphere was effective for securing reproducibility.

When the condition described in the present Examples was repeated ten times, the obtained liquid property was constant. Thereafter, the resultant was dried, and formed into a battery. The discharge energy density was ±3 %, and it was confirmed that good reproducibility was achieved.

The present invention has been specifically described above with reference to the embodiments and examples. The present invention is not limited to the aforesaid embodiments and examples, and various modifications are possible without departing from the scope of the present invention.

### INDUSTRIAL APPLICABILITY

The present invention is well adaptable to a field of a positive electrode used in a lithium ion secondary battery.

## Claims

1. A manufacturing method for manufacturing an electrode material employing layered crystal vanadium,
wherein a suspension containing a vanadium compound and a plurality of lithium compounds is heated.

2. The method according to claim 1,
wherein the plurality of lithium compounds is a combination of a first lithium compound that has oxidation/reduction property and acts as a reducing agent in a solvent of the suspension, and a second lithium compound that has no oxidation/reducing property.

3. The method according to claim 2,
wherein the first lithium compound is at least any one selected from the group consisting of lithium sulfide, lithium selenide, and lithium telluride.

4. The method according to claim 2 or 3,
wherein the second lithium compound is at least any one selected from the group consisting of lithium hydroxide, lithium acetate, lithium carbide, lithium chloride, lithium nitride, and lithium azide.

5. The method according to any one of claims 2 to 4,
wherein in the solvent, more pentavalent vanadium ions are present than tetravalent vanadium ions in terms of mol %.

6. The method according to any one of claims 2 to 5,
wherein a property of the solvent is such that the pH value of the solution into which the vanadium compound is dissolved is 5.7 or more.

7. The method according to any one of claims 2 to 6,
wherein the first lithium compound is a lithium sulfide,
the second lithium compound is a lithium hydroxide, and
the mixture ratio of the lithium sulfide and the lithium hydroxide is such that the lithium hydroxide is 3 mol % or more and 97 mol % or less with respect to the lithium sulfide.

8. The method according to any one of claims 1 to 7,
wherein the heating is carried out under an inert atmosphere.

9. The method according to any one of claims 1 to 8,
wherein a spray drying is carried out after the heating.

10. The method according to any one of claims 1 to 9,
wherein the suspension containing at least the vanadium compound and the plurality of lithium compounds does not contain 3,d-ethylenedioxythiophene.

11. The method according to claim 10,
wherein the suspension does not contain a sulfur-containing organic material and polymers thereof.

12. The method according to any one of claims 1 to 11,
wherein a ratio of a valance of pentavalent vanadium ions in the suspension is controlled by using the vanadium compound and the plurality of lithium compounds.

13. The method according to claim 12,
wherein the valence of the vanadium ions is maintained by heating the suspension.

14. The method according to claim 12 or 13,
wherein the ratio of the valence of the pentavalent vanadium ions in the suspension is 57 mol % or more.

15. An electric storage device having a positive electrode using an positive electrode active material of layered crystal vanadium,
wherein the positive electrode active material is manufactured according to the manufacturing method according to any one of claims 1 to 14.
